(19) Europäisches Patentamt
European Patent Office
Office européen des brevets

(11) **EP 3 588 136 B1**

(12) **EUROPEAN PATENT SPECIFICATION**

(45) Date of publication and mention
of the grant of the patent:
**03.03.2021 Bulletin 2021/09**

(21) Application number: **18180318.0**

(22) Date of filing: **28.06.2018**

(51) Int Cl.:
**G01S 13/931** *(2020.01)*      **G01S 13/89** *(2006.01)*
**G01S 7/41** *(2006.01)*       **G01S 13/42** *(2006.01)*
**G01S 13/72** *(2006.01)*

(54) **OBJECT REPRESENTATION AND CLASSIFICATION BASED ON VEHICLE SENSOR DETECTIONS**

OBJEKTDARSTELLUNG UND -KLASSIFIZIERUNG BASIEREND AUF FAHRZEUGSENSORERKENNUNGEN

REPRÉSENTATION ET CLASSIFICATION D'OBJETS BASÉES SUR DES DÉTECTIONS DE CAPTEURS DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2020 Bulletin 2020/01**

(73) Proprietor: **Veoneer Sweden AB**
**447 83 Vårgårda (SE)**

(72) Inventor: **Schneider, Robert**
**81369 München (DE)**

(74) Representative: **Sandstedt, Jonas Sven James**
**WESTPATENT AB**
**Almekärrsvägen 11**
**443 39 Lerum (SE)**

(56) References cited:
**US-A1- 2010 191 391     US-A1- 2016 349 363**

**Description**

TECHNICAL FIELD

The present disclosure relates to methods, sensor system control units, and vehicles for representing and classifying one or more objects using vehicle sensors.

BACKGROUND

Vehicle environment detection systems, such as for example camera systems, radio detection and ranging (radar) systems and light detection and ranging (lidar) systems, can be mounted on a vehicle in order to detect objects in a vicinity of the vehicle. The obtained detections can be used to implement functions such as speed control and collision prevention, ego motion estimation and scene understanding. For this purpose, it is desired to represent tracked objects in an efficient an accurate manner. It is also desired to classify the represented objects, i.e., to associate an object type such as car, truck, bicycle, and pedestrian, with each tracked object.

Known methods of representing tracked objects include using point models and polygon models, which are relatively complex. US 9,255,988 B2 describes how radar data, including Doppler measurement data, are used to form clusters, where each cluster represents a respective object.

US 20160003935 A1 discloses an object classification system for vehicle radar systems based on aggregated spectrograms in combination with a computer vision model.

US 2016/0349363 A1 discloses a radar imaging system in which the imaging system generates an image and transforms the image into world coordinates considering host position and heading. Once in world coordinates, successive radar images can be summed to produce an integrated image having a resolution which is improved compared with an originally generated image.

However, there is still a need to improve methods for representing detected objects, and for classifying the represented objects.

It is an object of the present disclosure to provide improved methods for representing detected objects in traffic environments, and for classifying the represented objects.

This object is obtained at least in part by a method for representing an object in a traffic environment using vehicle sensor data. The method comprises, for each cycle in a plurality of cycles, obtaining detections related to the object. The detections comprise detection coordinates, and the object is associated with a heading indicating a direction of motion of the object. The method also comprises transforming the detections from a sensor coordinate system to a representation coordinate system, wherein the representation coordinate system has an orientation defined based on the heading and wherein the transforming comprises a coordinate rotation determined based on the heading and a coordinate translation determined based on an object location in the sensor coordinate system. The method further comprises aggregating transformed detections with transformed detections from other cycles and representing the object by the aggregated detections.

Since the representation coordinate system is defined based on the heading of the object, sensor data from different viewing angles are automatically aligned after the transforming. This way, vehicle sensor detections can be efficiently and conveniently aggregated which makes accurate representation possible even if only a few detections are obtained in each cycle.

According to aspects, an axis of the representation coordinate system has an extension direction fixed in relation to the heading. For instance, the representation coordinate system can be defined to have one axis in the same extension direction as the motion direction. This way, different viewing angles of the object in different cycles are compensated for in the representation.

According to aspects, the vehicle sensor data comprises vehicle radar sensor data. Thus, advantageously, radar detections are aggregated into a common representation coordinate system which allows for, e.g., application of classification algorithms to the radar detection data in a robust manner.

According to some such aspects, the detections comprise Doppler data, and the transforming comprises determining a Doppler difference value for each detection relative to a velocity of the object. The Doppler difference values identify parts of an object which are moving differently from the object as a whole. Such differences in Doppler over an object are indicative of the object type and thus improve the object representation. According to some other aspects, the detections comprise signal strength data indicating a signal power associated with the reflection. The transforming then comprises determining a relative signal strength value for each detection, determined in relation to an average signal strength value of the detections in a cycle or over several cycles. Different object types reflect sensor signals differently on different parts of the object. This gives rise to differences in reflected signal strength over the object as a whole. Consequently, the object representation can be improved by including data on relative signal strength. According to other aspects, the method comprises quantizing transformed detections into discrete bins associated with the representation coordinate system. The quantizing provides for an efficient implementation and reduces processing requirements associated with the object representation, which is an advantage. The quantization also enables reduced complexity in operations such as classifying operations that operate on the object representation.

According to aspects, the method comprises classifying a type of the object based on the representation comprising the aggregated detections. The classifying is both robust and efficient in that data from more than one cycle is accounted for, and in that different sensor viewing angles are compensated for by the transforming. Object types may comprise other vehicles, such as cars, trucks or motorcycles. Object types may also comprise bicycles and pedestrians, and the like. Thus, the disclosed techniques have a wide area of applicability, which is an advantage.

According to some aspects, the classifying is based on a neural network such as a convolutional neural network (CNN). By representing the object in the representation coordinate system, known classification algorithms, such as CNNs, can be applied to classify the represented objects, which is an advantage.

There are also disclosed herein computer programs, sensor system control units, and vehicles, associated with the above-mentioned advantages.

## BRIEF DESCRIPTION OF THE DRAWINGS

The present disclosure will now be described more in detail with reference to the appended drawings, where:

Figure 1          shows a schematic top view of a vehicle with a vehicle environment detection system;
Figures 2-4    illustrate generation of an object representation;
Figure 5          is a flowchart illustrating methods according to the present disclosure.
Figures 6-8    illustrate example object representation operations;
Figures 9-10  schematically illustrate sensor system control units; and
Figure 11        schematically illustrates a computer program product;

## DETAILED DESCRIPTION

Aspects of the present disclosure will now be described more fully with reference to the accompanying drawings. The different devices, computer programs and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the disclosure in any way. As used herein, the singular forms "a", "an" and "the" are intended to include the plural forms as well, unless the context indicates otherwise.

A method and corresponding sensor system control unit is described herein which enables representing and also classifying arbitrary objects in a traffic environment using, e.g., an automotive (Doppler) radar.

A traffic environment is herein given a broad interpretation to mean any environment in which a vehicle comprising a sensor may operate. Thus, traffic environments may comprise vehicle traffic infrastructure such as city streets, side-walks, intersections, roads, and highways, but also mines, construction sites, manufacturing facilities, warehouses, and the like.

An object may be another vehicle, such as a car, truck or motorcycle. An object may also be a bicycle, a wheelchair, or a pedestrian.

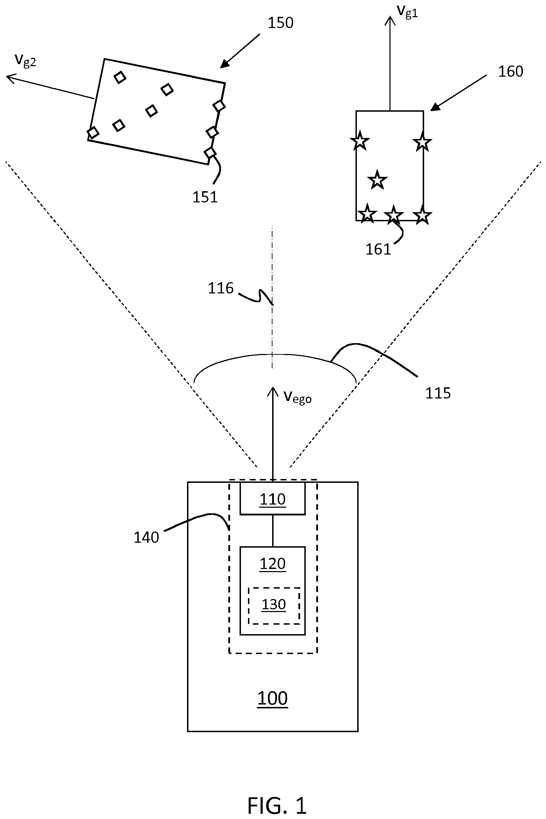

It is appreciated that the representing does not explicitly require the classifying. However, the representing and the classifying are preferably and advantageously used together. Figure 1 shows a schematic top view of a vehicle 100 with a vehicle environment detection system 140. The vehicle moves in a direction with velocity vector $v_{ego}$. The vehicle environment detection system 140 comprises a vehicle sensor 110 and a sensor system control unit 120. An optional storage module 130 may also be comprised in the sensor system control unit 120. The storage module 130 will be discussed in more detail below.

The sensor system control unit 120 is arranged to control operation of the vehicle sensor 110, and to obtain data from the vehicle sensor, such as detections corresponding to objects 150, 160 in the vicinity of the vehicle 100.

The vehicle sensor 110 may comprise a single sensor or a plurality of sensors. For instance, the vehicle sensor 110 may comprise any of a radar sensor, a camera sensor, an ultrasound sensor, a lidar sensor, and a laser scanner sensor. The vehicle sensor is arranged to generate a number of detections comprising coordinates in an absolute or in a relative coordinate system, i.e., relative to the location and orientation of the sensor. The coordinates may be cartesian coordinates or they may be polar coordinates.

A detection, herein, is a data point representing a spatial configuration of an object or part of an object in an environment or vicinity of the vehicle. For instance, in case of a radar sensor, a detection may be a data point indicating a range from the radar transceiver, i.e., from the sensor. The detection may also comprise a velocity estimate obtained from a Doppler shift of a received waveform, and an angle or bearing obtained from an angle of arrival of a reflected radar waveform.

New detections are produced more or less continuously by the sensor in cycles. Most sensor systems generate detection data on a regular basis, with a cycle interval of T seconds. For instance, the interval T may correspond to a frame length of a radar signal, or to an image processing duration of a camera-based sensor. Detections may be stored by the storage module 130 and retrieved for processing as needed.

In general, a detection indicates a location in two or three or more dimensions. A detection may, but does not have to, comprise information about a velocity vector indicating a motion direction of the detection. Detection data may comprise Doppler data, and also data related to a signal strength of the detection. It is appreciated that coordinates can be transformed between different reference systems. Thus, coordinates obtained in one reference system can be transformed into another reference system by rotation and translation operations.

The vehicle sensor 110 is associated with a field of view 115. In Figure 1, two objects 150, 160 are located in the field of view 115. A first object 160 generates detections marked by stars 161. A second object generates detections marked by squares 151. The first object is associated with a (two-dimensional) group motion vector $v_{g1} = [v_{g1x}, v_{g1y}]$, and the second object is associated with a group motion vector $v_{g2} = [V_{g2x}, V_{g2y}]$.

The first and the second object may be tracked over time by a tracking algorithm which associates detections with the different objects and continuously estimates, e.g., location and heading of the first and second object. Such tracking algorithms may robustly estimate the heading of a tracked object over time even if signal to noise ratio temporarily is reduced, or only a few detections are obtained in some cycles. Examples of such tracking algorithms include Kalman filters, extended Kalman filters, and Particle filters.

It is appreciated that, although the concepts described herein are mainly described using examples in two dimensions, an extension to three dimensions is straight forward.

The group motion vector of an object describes an average motion of the detections associated with the object over ground but represented in the sensor frame of reference. The direction of this over-ground velocity vector, or group motion vector, is a heading indicating a direction of motion of the object. It can be represented, e.g., by an angle, or by a unit vector, and is defined in relation to the orientation of the sensor 110. The orientation of the sensor 110 may, e.g., be defined by a boresight direction 116 of the sensor 110. In Figure 1, the boresight direction 116 of the sensor 110 coincides with the ego vehicle motion direction $V_{ego}$, but this is not necessarily always the case.

Some parts of the object may move in relation to the object as a whole, such as the wheels of a car, or the pedals of a bicycle. In these cases, some parts of the object may give rise to detections which move faster or slower than some other parts of the object. Such parts will have different Doppler characteristics when sensed by a radar sensor.

Preferably, the different detections 151, 161 in Figure 1 are classified as belonging to an object of a given type, e.g., a car, a truck, a pedestrian, or a bicycle. This classification data can then be used by other systems to support decision making, e.g., autonomous driving (AD) systems, or advanced driver assistance systems (ADAS).

A problem associated with such classification is that only a few detections may be obtained from each object in a cycle, and the objects may also appear with different cross-sections facing the sensor depending on the angle in which they are viewed by the sensor 110. Another problem associated with classifying objects such as the objects 150, 160 is that the detection data lacks structure, since detections are basically just a list of data points.

The techniques disclosed herein help to simplify classification of objects by defining an image-like representation of moving objects which can be used as input to, e.g., a general machine learning (ML) based classifier, such as a classification algorithm based on convolutional neural networks (CNN).

A central concept of the teachings herein is to aggregate detections from a moving object over time, i.e., over cycles, into a representation based on a motion direction of the object. The aggregated detections can be formatted as a representation in, e.g., matrix form, which is an image-like representation. This image-like representation can be constructed even if a very reduced amount of data, in the form of a few detection points per cycle are available. The methods disclosed herein can be used to generate object representations which comprise a three-dimensional (3D) array, similar to two-dimensional (2D) image data. Consequently, classification techniques traditionally used for image classification can be re-purposed, such as machine learning techniques in general and in particular algorithms based on CNNs.

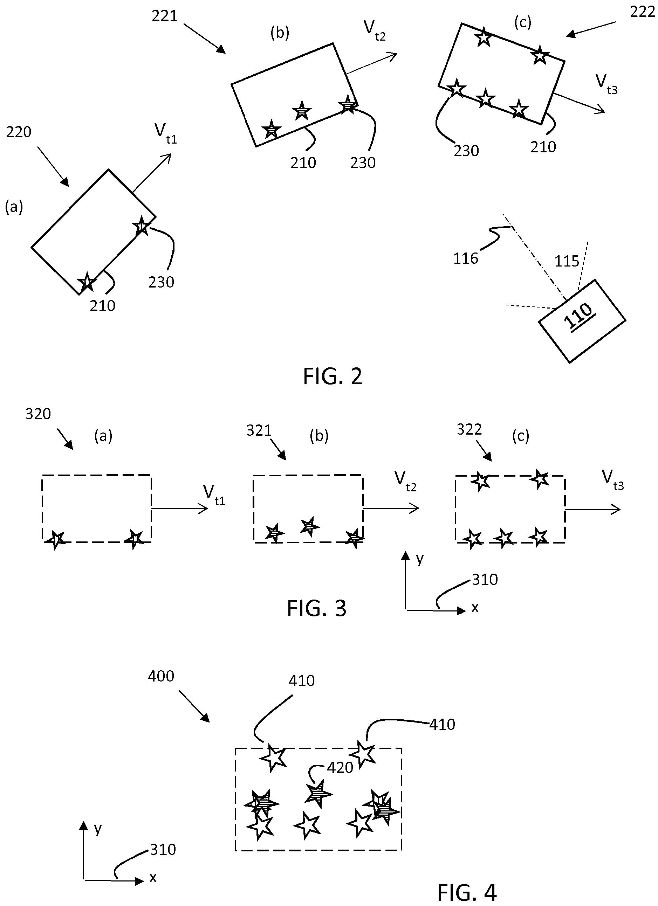

Figures 2-4 illustrates some principles of the methods for representing an object described herein.

Figure 2 shows an object 210 moving along a path 220, 221, 222 in the field of view 115 of the vehicle sensor 110. The object 210 is turning, and therefore the motion direction or heading Vt1, Vt2, Vt3 changes over consecutive cycles (a), (b), (c). The viewing angle of the object 210 from the perspective of the vehicle sensor 110 also changes from cycle to cycle. Note again that the heading is given over ground, but in the sensor frame of reference.

A varying number of detections 230 are obtained in the different cycles (a), (b), (c). In the first cycle (a) only two detections are obtained, while three detections are obtained in the second cycle (b), and five detections are obtained in the third cycle (c). Also, detections from different parts of the object are obtained in each cycle. A robust classification based on data obtained from a single cycle may not be reliable, due to the sparsity of data.

In order to compensate for the different viewing angles, and to increase the number of detections available for representing the object, detections are first transformed into a representation coordinate system. The representation coordinate system has an orientation which is defined based on the heading of the object. In the example of Figure 3, the representation x-axis 310 is always parallel to the heading in the sensor 110 frame of reference. This way, since the representation coordinate system has an orientation defined based on the heading instead of based on an absolute direction, and the heading vectors are given in the sensor frame of reference, the different viewing angles are automatically compensated for, which is why the objects from the different cycles appear aligned in Figure 3. To translate coordinates from the sensor coordinate system to the representation coordinate system, a rotation can be applied based on the heading.

Now, if the detections are also translated based on, e.g., a centre mass of the object, they can be aggregated into a representation 400 of the object. This representation is schematically illustrated in Figure 4. It is noted that the representation is relatively dense in terms of detections per surface unit, and comprises detections from different parts of the object, despite the sparsity of detections in certain cycles in Figure 2.

It is furthermore noted that detections originating from object borders 420 are not necessarily located at the border of the representation, due to the translating.

The representation can be formatted in different ways, as will be discussed in more detail below. For instance, the detections can be quantized and accumulated into bins associated with the representation coordinate system.

According to another example a density of detections over the representation coordinate system can be generated, such as a contour plot or the like.

To further improve the accuracy of the representation 400, Doppler data from the different detections can be included in the representation. Doppler data can be obtained from certain radar-based sensors, such as Doppler radar sensors. The Doppler data is then transformed into Doppler difference values indicating a difference between the Doppler value of the given detection and the Doppler values obtained on average from the object. Some objects, such as cars, are associated with an uneven distribution of Doppler values from different parts of the object. For instance, Doppler values obtained from detections associated with wheels 410 can have higher or lower Doppler values compared to detections from fixed parts 420 of the car. The representation may, for instance, be formatted as a 3-dimensional array of fixed size, corresponding to the physical dimensions $x$ which is a spatial dimension in direction of the object velocity vector (heading), $y$ which is a spatial dimension perpendicular to object velocity vector, and $v$ which is a Doppler difference dimension, i.e., a measure of object parts moving differently from group velocity, e.g., wheels, bicycle pedals, pedestrian arms & legs.

Also, to further improve on the representation, signal strength values associated with each detection can be used. Signal strength values are then transformed into relative signal strength values indicating a difference between signal strength of the given detection compared to signal strength obtained from the object on average. This improves on the representation since some objects are associated with parts that tend to give strong detections and other parts that tend to give more weak reflections.

The representation may thus also, as an example, be formatted as a 4-dimensional array of fixed size, further including the physical dimension r which is a signal strength dimension, i.e., a measure of object parts giving rise to particularly strong detections.

According to some aspects, the signal strength values can be used to weight the representation. This way, detections associated with strong signal strength is given more weight in the representation compared to detections associated with weaker signal strength.

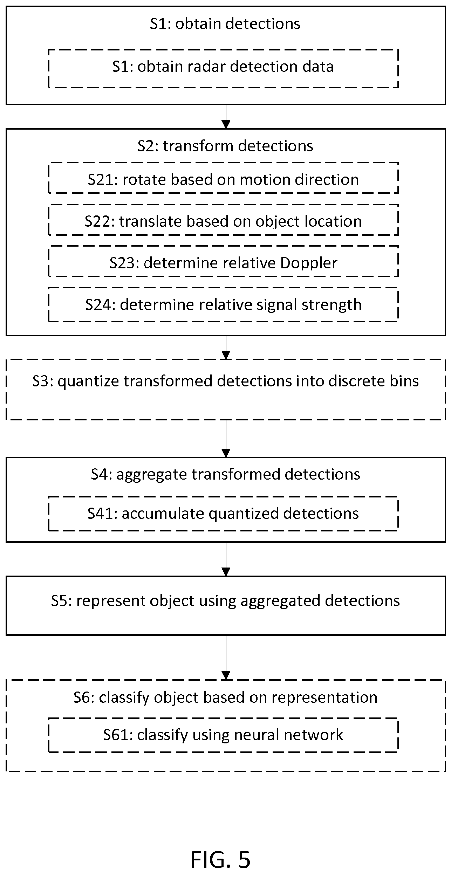

Figure 5 shows a flow chart that illustrates these methods in more detail. There is illustrated a method for representing an object 150, 160 using vehicle sensor 110 data. The vehicle sensor data may comprise sensor data from radar sensors, from lidar sensors, or from camera-based sensors. It is appreciated that the disclosed methods are advantageously used together with radar sensor data, but the methods are in no way limited to this sensor type. The method comprises, for each cycle in a plurality of cycles, obtaining S1 detections 151, 161 related to the object 150, 160. The detections comprise detection coordinates. These detection coordinates can be given in an absolute coordinate system or relative to, e.g., the vehicle sensor 110. The detection coordinates may be given in Cartesian coordinates, or in polar coordinates without difference.

The object 150, 160 is associated with a heading Vg1, Vg2. This heading, or direction of motion, is defined over ground but in the reference system of the sensor, i.e., in relation to an orientation or pointing direction 116 of the vehicle sensor 110. The heading may for example be obtained from a tracking algorithm which associates detections with an object and filters the heading to reduce impact of, e.g., sensor measurement noise. The method also comprises transforming S2 the detections from a sensor coordinate system to a representation coordinate system. It is appreciated that the sensor coordinate system may be an absolute coordinate system such as, e.g., the World Geodetic System of 1984 (WGS-84), or a relative coordinate system defined based on the location and orientation of the sensor 110. Notably, the representation coordinate system has an orientation defined based on the heading Vg1, Vg2. The orientation of the representation coordinate system is advantageous in that different viewing angles are compensated for, as was discussed and exemplified above in connection to Figures 2-4. According to aspects, an axis of the representation coordinate system has an extension direction fixed in relation to the heading. According to some other aspects, the transforming comprises a coordinate rotation S21 determined based on the heading Vg1, Vg2 and a coordinate translation S22 determined based on an object location in the sensor coordinate system.

To provide an example of the transforming, it is assumed that one or more moving objects are tracked by a tracker or tracking algorithm which provides (for each object, in each cycle) an object heading (*HeadingX, HeadingY*), which is a unit vector in the direction of object velocity over ground.

It is also assumed that detection coordinates (*PosX$_i$, PosY$_i$*) *(i* = 1...N) are obtained. It is noted that the number of detections N is likely different between different cycles. The detection coordinates are transformed into the representation coordinate system by rotating and translating according to $\begin{bmatrix} x_i \\ y_i \end{bmatrix} = \boldsymbol{R} \cdot \begin{bmatrix} PosX_i - \frac{1}{N}\sum_j PosX_j \\ PosY_i - \frac{1}{N}\sum_j PosY_j \end{bmatrix}$, where

$$\boldsymbol{R} = \begin{bmatrix} HeadingX & HeadingY \\ -HeadingY & HeadingX \end{bmatrix}.$$

A reliable estimate of object heading may not always be derivable directly based on one or two consecutive detection cycles. In such cases, a tracking algorithm may observe detections over several cycles in order to establish a more robust estimate of direction of motion. For instance, the velocity vector of the object may be filtered using a Kalman filter, which is able to provide a robust estimate of the heading even though the actual velocity in the direction of motion is small. It is assumed herein that a tracker provides a robust estimate of heading upon which the disclosed techniques may operate.

It is appreciated that the transforming and aggregating may be applied also to three-dimensional spatial data, i.e., three-dimensional coordinates. A coordinate translation and rotation to the representation coordinate system can then be performed as $\begin{bmatrix} x_i \\ y_i \\ z_i \end{bmatrix} = \boldsymbol{R'} \cdot \begin{bmatrix} PosX_i - \frac{1}{N}\sum_j PosX_j \\ PosY_i - \frac{1}{N}\sum_j PosY_j \\ PosZ_i - \frac{1}{N}\sum_j PosZ_j \end{bmatrix}$, where $\boldsymbol{R'}$ is a rotation based on object heading in three dimensions.

The method illustrated in Figure 5 furthermore comprises aggregating S4 transformed detections with transformed detections from other cycles, and also representing S5 the object 150, 160 by the aggregated detections. The aggregating can be performed in several different ways. For instance, detections can be aggregated into a list of detections, or quantized into bins as will be discussed in more detail below.

According to some aspects, the detections comprise Doppler data, and the transforming comprises determining S23 a Doppler difference value for each detection. The Doppler difference value is determined relative to a velocity of the object. The Doppler difference data provides an improved object representation since different objects are associated with different areas of increased Doppler. For instance, a pedestrian has arms and legs giving rise to in- or decreased Doppler, while a car has rotating wheels that also give rise to increased or decreased Doppler values compared to an average Doppler of the object.

According to an example, assume the N detections obtained in a cycle comprises Doppler data *VDop$_i$* (i = 1...N). It is again assumed that detection coordinates *(PosX$_i$, PosY$_i$) (i* = 1...N) are obtained for each of the N detection in the cycle, and also the relative velocity vector of the object (*VelX, VelY*). The Doppler difference value can be determined as $v_i$ = VDop$_i$-VDopGroup$_i$, where the group Doppler velocity

$$VDopGroup_i = \frac{VelX \cdot PosX_i + VelY \cdot PosY_i}{\sqrt{PosX_i^2 + PosY_i^2}}.$$

*VDopGroup$_i$* represents the doppler velocity (i.e. relative speed) that a reflection at position (*PosX$_i$, PosY$_i$*) would yield if all parts of the objects were moving with the same velocity. It is a projection of (*VelX, VelY*) onto (*PosX$_i$, PosY$_i$*). Thus, if all parts of the object would move uniformly, all $v_i$ would be zero. Non-uniformly moving parts (like wheels, bicycle pedals, pedestrian arms & legs) lead to nonzero Doppler difference values.

Alternatively, the Doppler difference value can also be determined as $v_i$ =|*VDop$_i$* - *VDopGroup$_i$*|, which only

accounts for Doppler difference magnitude, and does not take sign into account.

According to some other aspects, the detections comprise signal strength data indicating a signal power associated with the reflection. The transforming then comprises determining S24 a relative signal strength value for each detection, determined in relation to an average signal strength value of the detections. Similar to the Doppler difference values, the relative signal strength values, or equivalently energy values, may improve on the representation of an object. For instance, a car is often associated with strong radar reflections from the wheel-houses that are located in connection to the wheels (which in turn often give rise to high Doppler difference). A bicycle can be expected to generate stronger radar detections from the metal frame, than from the rider of the bicycle, at least when a radar sensor is used.

According to some aspects, the method comprises quantizing S3 transformed detections into discrete bins associated with the representation coordinate system. For instance, the size and the resolution of the representation bins can be defined by specifying bin edges for each dimension, e.g.

x-bins: [-3.25, -2.75, -2.25, -1.75, -1.25, -0.75, -0.25, 0.25, 0.75, 1.25, 1.75, 2.25, 2.75, 3.25] m, i.e., 13 bins.
y-bins: [-1.75, -1.25, -0.75, -0.25, 0.25, 0.75, 1.25, 1.75] m, i.e 7 bins.

The bins do not have to be equidistant as in the above example. It may also be advantageous to use an uneven number of bins, so that there is 1 central cell. For each dimension, one can choose if values outside the bin range should be discarded or clipped. According to some further aspects, the aggregating S4 comprises accumulating S41 quantized detection values in respective bins. To illustrate the aggregating and representing based on quantization into bins, consider an example where the representation is formatted as an array of bins p indexed by variables j, k, and 1. At the beginning of a track, the representation array p[j,k,l] is initialized to zero;
$p[j, k, l] \leftarrow 0$ for all $j = 1...N_x$, $k = 1...N_y$, $l = 1...N_v$.

Here, j and k index bins in two spatial dimensions and 1 index bins in a Doppler difference dimension as discussed above. Then, in each cycle, if the number of detections is large enough $(N \geq N_{min})$, all given detections $(i = 1...N)$ are mapped to the representation coordinate system and then quantized to the corresponding bin indices. The corresponding representation cells or bins in which a detection is mapped are increased by a constant value $\alpha > 0$ (e.g. $\alpha = 0.1$) :

$$(HeadingX, \ HeadingY, \ VelX, \ VelY, PosX_i, \ PosY_i, \ VDop_i) \mapsto (x_i, \ y_i, \ v_i) \mapsto$$

$$(j_i, \ k_i, \ l_i)$$

$p^{k+1}[j_i, k_i, l_i] \leftarrow p^k[j_i, k_i, l_i] + \alpha$ for all $i = 1...N$, where k is the cycle number. In the above, as before;

$$\begin{bmatrix} x_i \\ y_i \end{bmatrix} = R \cdot \begin{bmatrix} PosX_i - \frac{1}{N}\sum_j PosX_j \\ PosY_i - \frac{1}{N}\sum_j PosY_j \end{bmatrix}, \quad R = \begin{bmatrix} HeadingX & HeadingY \\ -HeadingY & HeadingX \end{bmatrix},$$

$v_i = VDop_i - VDopGroup_i$ and $VDopGroup_i = \frac{VelX \cdot PosX_i + VelY \cdot PosY_i}{\sqrt{PosX_i^2 + PosY_i^2}}$ · Bin indices $(j_i, k_i, l_i)$ are obtained by quantization of the representation coordinates $x_i, y_i, v_i$ according to a bin partitioning of the representation.

According to some aspects, the common increment $\alpha$ above is multiplied by the signal strength value associated with the corresponding detection $i$. According to some aspects, all representation cells are then multiplied by a common factor $\gamma$ to ensure that all $p[j, k, l] \lesssim 1$:
$p[j, k, l] \leftarrow \gamma p[j, k, l]$ for all $j,k, l$

According to one example a normalization is used, i.e., $\gamma = 1/\sum_{j,k,l}p[j, k, l]$. Thus, the representation bin contents $p[j, k, l]$ always sum to 1.

According to another example, a constant decay factor is used, i.e. , $\gamma = 1 - \beta$, where $\beta < 1$. This way a memory effect is introduced which gradually forgets about past input and puts more emphasis on more recent inputs to the representation.

As mentioned above, the method may also comprise classifying, i.e., according to some aspects, the method comprises classifying S6 a type of the object based on the representation comprising the aggregated detections. According to some such aspects, the classifying is based on a neural network, such as a convolutional neural network, CNN, S61.

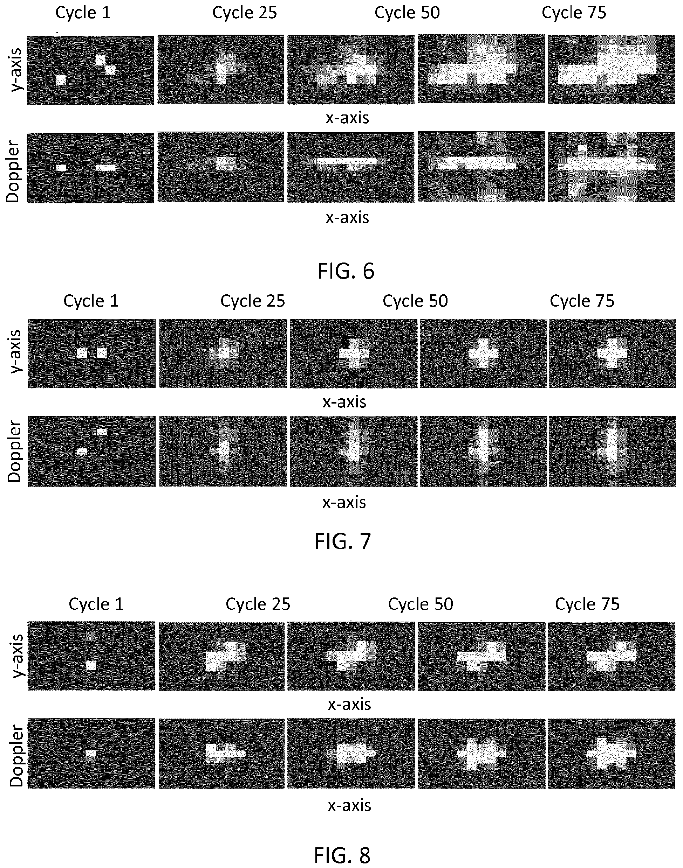

Figures 6-8 illustrate the disclosed methods according to an example where different objects are represented using quantized detections. Lighter regions correspond to representation bins $p[j, k, l]$ with many detections and darker regions correspond to bins $p[j, k, l]$ with fewer detections. In all Figures, the upper row of graphs shows the obtained representation in two dimensions where the Doppler difference data has been summed over coordinates, i.e., where the representation has been projected onto x-y axes. The lower row of graphs shows the corresponding results when summing over the y-dimension, i.e., where the representation has been projected onto x-v axes.

Figure 6 is an example of a result of representing a vehicle over 100 cycles. The x-y-projection shows that the large spatial extent of the car is obtained properly, and it gradually appears as more and more cycles of the method are executed. Doppler difference values of the cars wheels are visible in the x-v-projection.

Figure 7 shows results for representing a pedestrian. The x-y-projection shows that the small spatial extent of the pedestrian is properly represented. Doppler difference values of the pedestrian's arms and legs are clearly visible in the x-v-projection. Had all body parts moved in the same manner, then the graph would have been all dark apart from the central bins.

Figure 8 shows results for representing a bicycle. The x-y-projection shows that elongated shape of the cyclist is accurately represented. Doppler difference values of the bicycle wheels are visible in the x-v-projection but are notably not as prominent as for the car and the pedestrian examples in Figures 6 and 7.

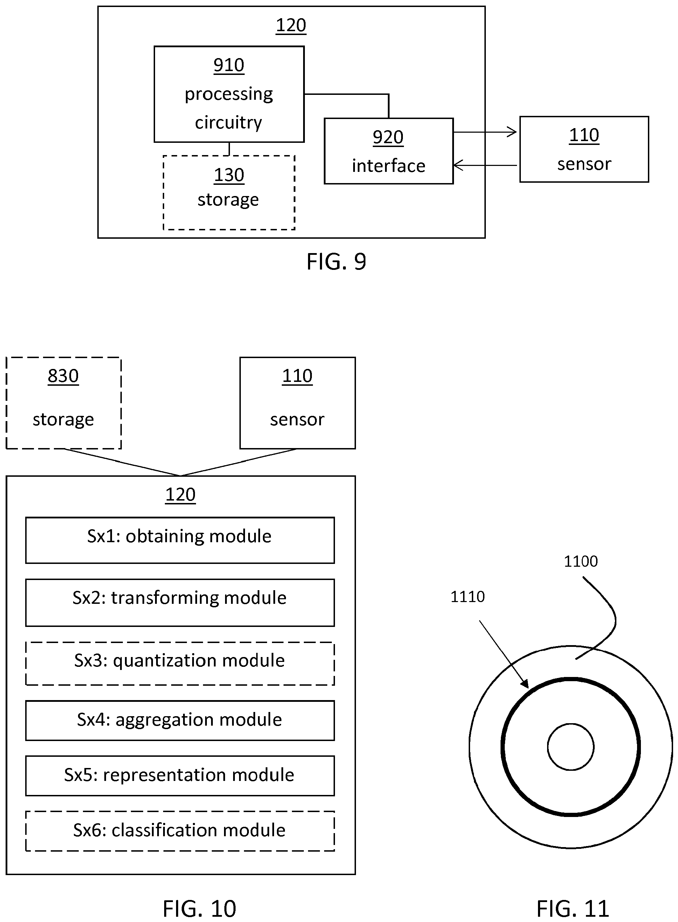

Figure 9 schematically illustrates, in terms of a number of functional units, the components of a sensor system control unit 120 according to an embodiment of the discussions herein. Processing circuitry 910 is provided using any combination of one or more of a suitable central processing unit CPU, multiprocessor, microcontroller, digital signal processor DSP, etc., capable of executing software instructions stored in a computer program product, e.g. in the form of a storage medium 130. The processing circuitry 910 may further be provided as at least one application specific integrated circuit ASIC, or field programmable gate array FPGA.

Particularly, the processing circuitry 910 is configured to cause the control unit 120 to perform a set of operations, or steps. For example, the storage medium 130 may store the set of operations, and the processing circuitry 610 may be configured to retrieve the set of operations from the storage medium 130 to cause the control unit 120 to perform the set of operations. The set of operations may be provided as a set of executable instructions. Thus, the processing circuitry 910 is thereby arranged to execute methods as herein disclosed.

The storage medium 130 may also comprise persistent storage, which, for example, can be any single one or combination of magnetic memory, optical memory, solid state memory or even remotely mounted memory.

The control unit 120 may further comprise an interface 920 for communications with at least one external device, such as a vehicle sensor 110. As such the interface 920 may comprise one or more transmitters and receivers, comprising analogue and digital components and a suitable number ports for wireline or wireless communication.

The processing circuitry 910 controls the general operation of the control unit 120 e.g. by sending data and control signals to the interface 920 and the storage medium 130, by receiving data and reports from the interface 920, and by retrieving data and instructions from the storage medium 130. Other components, as well as the related functionality, of the control node are omitted in order not to obscure the concepts presented herein.

Thus, Figure 9 illustrates a sensor system control unit 120 for processing detections related to an object 150, 160 obtained from a vehicle sensor 110.

There is also disclosed herein a vehicle 100 comprising the sensor system control unit 120. This vehicle was discussed, e.g., in connection to Figure 1.

Figure 10 shows a sensor system control unit 120 for representing an object 150, 160 in a traffic environment using vehicle sensor 110 data. The sensor system control unit comprises an obtaining module Sx1 configured to, for each cycle in a plurality of cycles, obtain detections related to the object 150, 160. The detections comprise detection coordinates, and the object is associated with a heading Vg1, Vg2 indicating a direction of motion of the object. The sensor system control unit also comprises a transforming module Sx2 arranged to transform the detections into a representation coordinate system. The representation coordinate system has an orientation determined based on the heading Vg1, Vg2. There is further comprised an aggregation module Sx4 arranged to aggregate transformed detection coordinates with transformed detection coordinates from other cycles, and a representation module Sx5 configured to represent the object by the aggregated detections.

According to some aspects, the sensor system control unit 120 comprises a quantization module Sx3 configured to transform detections into discrete bins associated with the representation coordinate system.

According to some other aspects, the sensor system control unit 120 also comprises a classification module Sx6 arranged to classify a type of the object 150, 160 based on the representation comprising the aggregated detections.

The various aspects of the methods discussed herein are described in the general context of method steps or processes, which may be implemented in one aspect by a computer program product, embodied in a computer-readable medium, including computer-executable instructions, such as program code, executed by computers in networked environments. Figure 11 illustrates one such computer program product 1100 comprising computer-executable instructions 1110. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc., that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

**Claims**

1. A method for representing an object (150, 160) in a traffic environment using vehicle sensor (110) data, **characterized in that** the method comprises, for each cycle in a plurality of cycles;
   obtaining (S1) detections (151, 161) related to the object (150, 160), the detections comprising detection coordinates, the object (150, 160) being associated with a heading (Vg1, Vg2) indicating a direction of motion of the object (150, 160),
   transforming (S2) the detections from a sensor coordinate system to a representation coordinate system, the representation coordinate system having an orientation defined based on the heading (Vg1, Vg2),
   wherein the transforming comprises a coordinate rotation (S21) determined based on the heading (Vg1, Vg2) and a coordinate translation (S22) determined based on an object location in the sensor coordinate system,
   aggregating (S4) transformed detections with transformed detections from other cycles, and
   representing (S5) the object (150, 160) by the aggregated detections.

2. The method according to claim 1, wherein the vehicle sensor data comprises vehicle radar sensor data (S11) .

3. The method according to any previous claim, wherein an axis of the representation coordinate system has an extension direction fixed in relation to the heading (Vg1, Vg2).

4. The method according to any previous claim, wherein the detections comprise Doppler data, wherein the transforming comprises determining (S23) a Doppler difference value for each detection, the Doppler difference value being determined relative to a velocity of the object.

5. The method according to any previous claim, wherein the detections comprise signal strength data indicating a signal power associated with the reflection, wherein the transforming comprises determining (S24) a relative signal strength value for each detection, determined in relation to an average signal strength value of the detections.

6. The method according to any previous claim, comprising quantizing (S3) transformed detections into discrete bins associated with the representation coordinate system.

7. The method according to claim 6, wherein the aggregating (S4) comprising accumulating (S41) quantized detection values in respective bins.

8. The method according to any previous claim, comprising classifying (S6) a type of the object based on the representation comprising the aggregated detections.

9. The method according to claim 8, wherein the classifying is based on a neural network (S61).

10. The method according to claim 9, wherein the neural network comprises a convolutional neural network, CNN.

11. A computer program comprising computer program code which, when executed in a sensor system control unit (120), causes the sensor system control unit (120) to execute a method according to any of claims 1-10.

12. A sensor system control unit (120) for representing an object in a traffic environment (150, 160) using vehicle sensor (110) data, **characterized in that** the control unit (120) comprises;
    an obtaining module (Sx1) configured to, for each cycle in a plurality of cycles, obtain detections related to the object (150, 160), the detections comprising detection coordinates, the object being associated with a heading (Vg1, Vg2) indicating a direction of motion of the object (150, 160),
    a transforming module (Sx2) arranged to transform the detections into a representation coordinate system, the representation coordinate system having an orientation determined based on the heading (Vg1, Vg2), wherein the transforming comprises a coordinate rotation determined based on the heading (Vg1, Vg2) and a coordinate translation determined based on an object location in the sensor coordinate system,
an aggregation module (Sx4) arranged to aggregate transformed detection coordinates with transformed detection coordinates from other cycles, and
a representation module (Sx5) configured to represent the object by the aggregated detections.

13. The sensor system control unit (120) according to claim 12, comprising a classification module (Sx6) arranged to classify a type of the object (150, 160) based on the representation comprising the aggregated detections.

14. A vehicle (100) comprising the sensor system control unit (120) according to claim 13.

**Patentansprüche**

1. Verfahren zum Darstellen eines Objekts (150, 160) in einer Verkehrsumgebung unter Verwendung von Daten eines Fahrzeugsensors (110), **dadurch gekennzeichnet, dass** das Verfahren für jeden Zyklus in einer Vielzahl von Zyklen umfasst:

Erlangen (S1) von Erkennungen (151, 161), die das Objekt (150, 160) betreffen, wobei die Erkennungen Erkennungskoordinaten umfassen, wobei das Objekt (150, 160) einem Kurs (Vg1, Vg2) zugeordnet ist, der eine Bewegungsrichtung des Objekts (150, 160) angibt,
Transformieren (S2) der Erkennungen von einem Sensorkoordinatensystem in ein Darstellungskoordinatensystem, wobei das Darstellungskoordinatensystem eine Ausrichtung aufweist, die auf der Grundlage des Kurses (Vg1, Vg2) definiert ist,
wobei das Transformieren eine Koordinatendrehung (S21), die auf der Grundlage des Kurses (Vg1, Vg2) ermittelt wird, und eine Koordinatenumsetzung (S22) umfasst, die auf der Grundlage einer Objektposition im Sensorkoordinatensystem ermittelt wird,
Aggregieren (S4) transformierter Erkennungen mit transformierten Erkennungen aus anderen Zyklen und
Darstellen (S5) des Objekts (150, 160) durch die aggregierten Erkennungen.

2. Verfahren nach Anspruch 1, wobei die Fahrzeugsensordaten Fahrzeugradarsensordaten (S11) umfassen.

3. Verfahren nach einem der vorstehenden Ansprüche, wobei eine Achse des Darstellungskoordinatensystems eine Erstreckungsrichtung aufweist, die in Bezug auf den Kurs (Vg1, Vg2) festgelegt ist.

4. Verfahren nach einem der vorstehenden Ansprüche, wobei die Erkennungen Dopplerdaten umfassen, wobei das Transformieren das Ermitteln (S23) eines Dopplerdifferenzwerts für jede Erkennung umfasst, wobei der Dopplerdifferenzwert relativ zu einer Geschwindigkeit des Objekts ermittelt wird.

5. Verfahren nach einem der vorstehenden Ansprüche, wobei die Erkennungen Signalstärkedaten umfassen, die eine der Reflexion zugeordnete Signalleistung angeben, wobei das Transformieren das Ermitteln (S24) eines relativen Signalstärkewerts für jede Erkennung umfasst, der in Bezug auf einen durchschnittlichen Signalstärkewert der Erkennungen ermittelt wird.

6. Verfahren nach einem der vorstehenden Ansprüche, umfassend das Quantisieren (S3) transformierter Erkennungen in diskrete Bins, die dem Darstellungskoordinatensystem zugeordnet sind.

7. Verfahren nach Anspruch 6, wobei das Aggregieren (S4) das Akkumulieren (S41) quantisierter Erkennungswerte in jeweiligen Bins umfasst.

8. Verfahren nach einem der vorstehenden Ansprüche, umfassend das Klassifizieren (S6) eines Typs des Objekts auf der Grundlage der Darstellung, die die aggregierten Erkennungen umfasst.

9. Verfahren nach Anspruch 8, wobei das Klassifizieren auf einem neuronalen Netz (S61) beruht.

10. Verfahren nach Anspruch 9, wobei das neuronale Netz ein faltendes neuronales Netz (CNN, Convolutional Neural Network) umfasst.

**11.** Computerprogramm, das Computerprogrammcode umfasst, der bei Ausführung in einer Sensorsystem-Steuereinheit (120) die Sensorsystem-Steuereinheit (120) veranlasst, ein Verfahren nach einem der Ansprüche 1 bis 10 auszuführen.

**12.** Sensorsystem-Steuereinheit (120) zum Darstellen eines Objekts in einer Verkehrsumgebung (150, 160) unter Verwendung von Daten des Fahrzeugsensors (110), **dadurch gekennzeichnet, dass** die Steuereinheit (120) umfasst:

ein Erlangungsmodul (Sx1), das konfiguriert ist, für jeden Zyklus in einer Vielzahl von Zyklen Erkennungen zu erlangen, die das Objekt (150, 160) betreffen, wobei die Erkennungen Erkennungskoordinaten umfassen, wobei das Objekt einem Kurs (Vg1, Vg2) zugeordnet ist, der eine Bewegungsrichtung des Objekts (150, 160) angibt, ein Transformationsmodul (Sx2), das angeordnet ist, die Erkennungen in ein Darstellungskoordinatensystem zu transformieren, wobei das Darstellungskoordinatensystem eine Ausrichtung aufweist, die auf der Grundlage des Kurses (Vg1, Vg2) ermittelt wird, wobei das Transformieren eine auf der Grundlage des Kurses (Vg1, Vg2) ermittelte Koordinatendrehung und eine Koordinatenverschiebung umfasst, die auf der Grundlage einer Objektposition im Sensorkoordinatensystem ermittelt wird, ein Aggregationsmodul (Sx4), das angeordnet ist, transformierte Erkennungskoordinaten mit transformierten Erkennungskoordinaten aus anderen Zyklen zu aggregieren, und ein Darstellungsmodul (Sx5), das konfiguriert ist, das Objekt durch die aggregierten Erkennungen darzustellen.

**13.** Sensorsystem-Steuereinheit (120) nach Anspruch 12, umfassend ein Klassifizierungsmodul (Sx6), das angeordnet ist, einen Typ des Objekts (150, 160) auf der Darstellung zu klassifizieren, die die aggregierten Erkennungen umfasst.

**14.** Fahrzeug (100), das die Sensorsystem-Steuereinheit (120) nach Anspruch 13 umfasst.

**Revendications**

**1.** Procédé de représentation d'un objet (150, 160) dans un environnement de trafic en utilisant des données d'un capteur de véhicule (110), **caractérisé en ce que** le procédé comprend, pour chaque cycle dans une pluralité de cycles ;
l'obtention (S1) de détections (151, 161) se rapportant à l'objet (150, 160), les détections comprenant des coordonnées de détection, l'objet (150, 160) étant associé à un cap (Vg1, Vg2) indiquant une direction de mouvement de l'objet (150, 160),
la transformation (S2) des détections d'un système de coordonnées de capteur à un système de coordonnées de représentation, le système de coordonnées de représentation ayant une orientation définie sur la base du cap (Vg1, Vg2),
dans lequel la transformation comprend une rotation de coordonnée (S21) déterminée sur la base du cap (Vg1, Vg2) et une translation de coordonnée (S22) déterminée sur la base d'une localisation d'objet dans le système de coordonnées de capteur,
l'agrégation (S4) des détections transformées avec des détections transformées provenant d'autres cycles, et
la représentation (S5) de l'objet (150, 160) par les détections agrégées.

**2.** Procédé selon la revendication 1, dans lequel les données de capteur de véhicule comprennent des données de capteur radar de véhicule (S11).

**3.** Procédé selon l'une quelconque revendication précédente, dans lequel un axe du système de coordonnées de représentation a une direction d'extension fixée par rapport au cap (Vg1, Vg2).

**4.** Procédé selon l'une quelconque revendication précédente, dans lequel les détections comprennent des données Doppler, dans lequel la transformation comprend la détermination (S23) d'une valeur de différence Doppler pour chaque détection, la valeur de différence Doppler étant déterminée par rapport à une vitesse de l'objet.

**5.** Procédé selon l'une quelconque revendication précédente, dans lequel les détections comprennent des données de force de signal indiquant une puissance de signal associée à la réflexion, dans lequel la transformation comprend la détermination (S24) d'une valeur de force de signal relative pour chaque détection, déterminée par rapport à une valeur de force de signal moyenne des détections.

**6.** Procédé selon l'une quelconque revendication précédente, comprenant la quantification (S3) des détections transformées en compartiments distincts associés au système de coordonnées de représentation.

7. Procédé selon la revendication 6, dans lequel l'agrégation (S4) comprend l'accumulation (S41) des valeurs de détection quantifiées dans des compartiments respectifs.

8. Procédé selon l'une quelconque revendication précédente, comprenant la classification (S6) d'un type de l'objet sur la base de la représentation comprenant les détections agrégées.

9. Procédé selon la revendication 8, dans lequel la classification est basée sur un réseau neuronal (S61).

10. Procédé selon la revendication 9, dans lequel le réseau neuronal comprend un réseau neuronal convolutionnel, CNN.

11. Programme informatique comprenant un code de programme informatique qui, lorsqu'il est exécuté dans une unité de commande de système de capteur (120), amène l'unité de commande de système de capteur (120) à exécuter un procédé selon l'une quelconque des revendications 1 à 10.

12. Unité de commande de système de capteur (120) pour représenter un objet dans un environnement de trafic (150, 160) en utilisant des données d'un capteur de véhicule (110), **caractérisée en ce que** l'unité de commande (120) comprend ;
un module d'obtention (Sx1) configuré, pour chaque cycle dans une pluralité de cycles, pour obtenir des détections se rapportant à l'objet (150, 160), les détections comprenant des coordonnées de détection, l'objet étant associé à un cap (Vg1, Vg2) indiquant une direction de mouvement de l'objet (150, 160),
un module de transformation (Sx2) agencé pour transformer les détections en un système de coordonnées de représentation, le système de coordonnées de représentation ayant une orientation déterminée sur la base du cap (Vg1, Vg2), dans lequel la transformation comprend une rotation de coordonnée déterminée sur la base du cap (Vg1, Vg2) et une translation de coordonnée déterminée sur la base d'une localisation d'objet dans le système de coordonnées de capteur,
un module d'agrégation (Sx4) agencé pour agréger les coordonnées de détection transformées avec des coordonnées de détection transformées provenant d'autres cycles, et
un module de représentation (Sx5) configuré pour représenter l'objet par les détections agrégées.

13. Unité de commande de système de capteur (120) selon la revendication 12, comprenant un module de classification (Sx6) agencé pour classer un type de l'objet (150, 160) sur la base de la représentation comprenant les détections agrégées.

14. Véhicule (100) comprenant l'unité de commande de système de capteur (120) selon la revendication 13.

FIG. 1

FIG. 2

FIG. 3

FIG. 4

S1: obtain detections

S1: obtain radar detection data

S2: transform detections

S21: rotate based on motion direction

S22: translate based on object location

S23: determine relative Doppler

S24: determine relative signal strength

S3: quantize transformed detections into discrete bins

S4: aggregate transformed detections

S41: accumulate quantized detections

S5: represent object using aggregated detections

S6: classify object based on representation

S61: classify using neural network

FIG. 5

Cycle 1 | Cycle 25 | Cycle 50 | Cycle 75

y-axis

x-axis

Doppler

x-axis

FIG. 6

Cycle 1 | Cycle 25 | Cycle 50 | Cycle 75

y-axis

x-axis

Doppler

x-axis

FIG. 7

Cycle 1 | Cycle 25 | Cycle 50 | Cycle 75

y-axis

x-axis

Doppler

x-axis

FIG. 8

FIG. 9

FIG. 10

FIG. 11

**REFERENCES CITED IN THE DESCRIPTION**

**Patent documents cited in the description**

- US 9255988 B2
- US 20160003935 A1
- US 20160349363 A1